# EUROPEAN PATENT SPECIFICATION

(11) **EP 2 159 612 B1**
(45) Date of publication and mention of the grant of the patent: **26.06.2013**
(21) Application number: 08015025.3
(22) Date of filing: 26.08.2008
(51) Int. Cl.: G02B 6/38

(54) **Connector for optical fiber cable**
Steckverbinder für Glasfaserkabel
Connecteur pour câble de fibre optique

(43) Date of publication of application: 03.03.2010
(73) Proprietor: Tyco Electronics Nederland B.V., 5222 AR 's-Hertogenbosch (NL)
(72) Inventor: Schneider, Paul, 5291 AH Gemonde (NL)
(74) Representative: Grünecker, Kinkeldey, Stockmair & Schwanhäusser

(56) References cited:
- EP-A- 1 091 227
- US-A- 5 395 360
- US-A- 5 956 793
- US-B1- 6 179 481

## Description

The present invention relates to an optical fiber connector for connecting a fiber optic cable, the optical fiber connector comprising a housing and an optical fiber, having an end face, the end face extending outwards from the housing, and a protective coating, said protective coating encasing the end face of the fiber ferrule.

Furthermore, the invention relates to a method of producing an optical fiber connector for connecting a fiber optic cable, comprising a housing, and a fiber ferrule having an end face, the end face extending outwards from the housing.

Optical fibers are typically provided in fiber optic cables. There are, for instance, single and multiple fiber cable constructions, aerial and direct burial cable types. Usually an outer jacket of PVC or similar material encases the cable to protect the inside of the cable from environmental impacts.

To set up an optical communication system, fiber optic cables are connected to optical devices and to one another. Connecting an optical cable requires that the individual optical fibers be precisely aligned with the mating fibers or devices. Commonly optical fibers are between 100 and 500 micrometer in diameter. Due to the small size of optical fibers the mating ends should be aligned with one another within a few micrometers and be abutted against one another with no gaps. Even a slight deviation of the fibers can cause a considerable loss of light transmitted along the fibers. Thus, when an optical cable is connected the end faces of the optical fibers must be absolutely clean and even.

Optical fiber connectors terminate the end of an optical fiber and enable quicker and easier connection and disconnection then splicing. Optical fiber connectors mechanically couple and align optical fibers so that light can pass.

A variety of optical fiber connectors is available. The main differences among different connectors are dimensions and methods of mechanical coupling. For example, the "mechanical transfer" (MT)-type has a fiber ferrule mounted in the connector housing, biased by a spring to a forward position. When the ferrule is in the forward position, the front face of the ferrule projects from the housing. The housing receives a multi fiber cable, the individual fibers of the cable extending through the ferrule to the front face. The front face of the ferrule and the end faces of the fibers are polished to form an even surface.

Further types of optical fiber connectors are, for instance, "straight tip" (ST) connectors, "local connectors" (LC) and "standard connectors" (SC).

WO 2007/146355 A2 describes an LC-type connector and an SC-type connector, each having a ferrule assembly comprising a ferrule extending forward from the front portion of the housing and suitable for containing one fiber of a fiber optic cable attached to a rear portion of the optical fiber connector.

US 6,171,119 B1 discloses a protection cap for an electrical connector with a plurality of terminals extending from a first side thereof. The protection cap has a body which is provided with a cavity for releaseably receiving a second side of the connector which is opposite the first side. The cap comprises one or two arms extending from the body for wrapping laterally around the connector, and a terminal retainer arranged on the free ends of the arms for engaging at least some of the terminals.

The optical fiber connectors may be installed on the ends of fiber optic cables by a cable manufacturer. The cable manufacturer inserts the fibers into the fiber bores and polishes the ends of the fibers precisely, so that they are aligned with the front of the ferrule.

During transportation and handling, the end faces of connectors, in particular the ferrule end faces, can be polluted. Dirt or dust on the end faces can absorb much light and thereby cause signal losses. Due to the small diameter of optical fibers airborne particles can be about the size of the core of optical fibers. In addition, dirt or dust may scratch connectors if not removed. Cleaning and/or polishing the end faces before installation costs time and thereby causes additional costs. Optical fiber connectors with heavity damaged end faces must be sorted out.

Hence, a problem to be solved is how to reduce the effort of cleaning and polishing end faces of optical fiber connectors, in particular ferrule end faces.

This problem is solved according to the invention by providing the protective coating with a glutinous surface, at least where its face abuts the end face of the fiber ferrule. The protective coating avoids pollution and damage of the end face of the fiber ferrule. It can be used before and after attaching a fiber optic cable or inserting an optical fiber into the fiber ferrule. The invention can be embodied in any standard connector configuration, including, for example, SC, LC, MU, FC and ST-type connectors.

To reduce manufacturing costs the protective coating can be made from a cast material. To enable cost-saving production of high numbers of protective coatings and to provide the coatings with a soft surface and an elastic structure, the protective coating can be made from a plastic material.

To allow for sealing the end face of the fiber ferrule and to facilitate mounting and dismounting of the protective coating the protective coating can be made of an elastic material, in particular plastics like rubber-like material, for example natural rubber or silicone rubber.

As the outer shape of the protective coating hardly influences the sealing of the end face of the fiber ferrule the protective coating can be formed without a casting mold. The protective coating can be formed by hand or alternatively by leaving a drop of fluent plastics material at the end of the fiber ferrule. To use the gravity for forming the melt around the fiber ferrule, the fiber ferrule may be positioned upstanding before applying the coating material. Alternatively the coating material melt can be formed by centrifugal forces.

In a further advantageous embodiment of the invention, the protective coating can be spaced apart from the housing to avoid a connection between the protective coating and the housing while the protective coating is molded over the fiber ferrule. Furthermore, arranging the protective coating offset from the housing facilitates dismounting the protective coating, as the diameter of the protective coating projecting above the diameter of the fiber ferrule may serve as grip or stop for catching the protective coating.

To allow for cleaning the end face of the fiber ferrule by detaching the protective coating the protective coating may comprise at least where its face abuts the end face of the fiber ferrule a glutinous surface. A glutinous or sticky surface can absorb any dirt or dust and leaves a clean end face when the protective coating is dismounted from the fiber ferrule. The glutinous surface can be a characteristic feature of the coating material or be added by applying an adhesive. Alternatively or additionally, the dirt or dust on the fiber ferrule can be absorbed or grabbed by a fluent melt which is molded over the fiber ferrule to form the protective coating.

In order to reduce manufacturing costs, the protective coating can be integrally formed from the housing and/or be made of the same material. The protective coating may be formed in one mold together with the housing. While the housing of the optical fiber connector can be molded over the ferrule assembly, the protective coating can be molded over the fiber ferrule.

To provide the optical fiber connector with a captive fastener for preventing loss of the protective coating, the protective coating can be connected to the housing. The connection between the housing and the protective coating may be built up by a strip which is an integral part of the housing and/or the protective coating.

In a further embodiment of the invention the thickness of the wall of the protective coating in the longitudinal direction of the fiber ferrule can correspond to at least one diameter of the fiber ferrule. By this minimum thickness of the wall of the protective coating, a sufficient damping is guaranteed so that damage of the fiber ferrule by impacts or knocks is prevented, in particular damage of the end face of the fiber ferrule.

To facilitate dismounting or detaching the protective coating of the fiber ferrule, the protective coating may comprise at least one protrusion, extending substantially transversely to the longitudinal direction of the fiber ferrule. Such a protrusion facilitates gripping or holding the protective coating while mounting or dismounting the coating.

According to the above mentioned method, the problem is solved by molding a protective coating over the end face of the fiber ferrule. This over molding allows for an optimal form fit and sealing between the protective coating and the fiber ferrule and for absorbing dirt or dust left on the fiber ferrule into the fluent mold. As the mold does not build up an adhesive bond to the fiber ferrule, it can be dismounted after hardening without leaving remains.

Alternatively, the protective coating can be made of a kneadable material, for example wax, and be kneaded over the end face of the fiber ferrule.

In order that the invention and its various other preferred features may be understood more easily, some embodiments thereof will now be described, by way of example only, with reference to the drawings in which:
Fig. 1 shows a side view of a first embodiment of the invention;
Fig. 2 shows a side view of a second embodiment of the invention;
Fig. 3 shows an enlarged cross sectional view of a third embodiment of the invention;
Fig. 4 shows a fourth embodiment of the invention;
Fig. 5 shows a fifth embodiment of the invention;
Fig. 6 shows a sixth embodiment of the invention;
Fig. 7 shows a seventh embodiment of the invention.

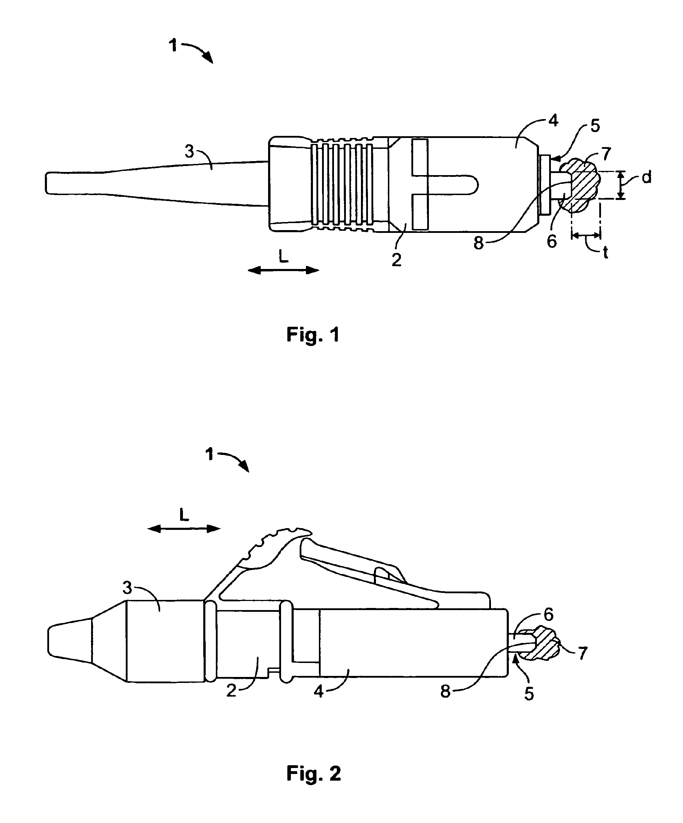

A preferred embodiment of the invention will now be described with reference to Fig. 1. Fig. 1 shows the invention embodied in a standard connector (SC) 1. The optical fiber connector comprises a housing 2 having a rear portion 3 for attachment to a fiber optic cable (not shown) and a front portion 4 for receiving a ferrule assembly 5. The ferrule assembly 5 comprises a fiber ferrule 6 which is encased or coated by a protective coating 7, shown in a cross sectional view. The protective coating 7 covers the whole end face 8 of the fiber ferrule 6.

The protective coating 7 is made of an elastically deformable material that forms around the shape of the fiber ferrule 6. To save material and to allow for sealing around the ferrule, the protective coating 7 is spaced apart from the housing 2. To absorb any dirt on the end face of the ferrule which was there before attaching the protective coating 7, at least the inner surface of the protective coating 7 abutting the end face 8 is provided with a sticky surface.

When the protective coating 7 is pulled off the fiber ferrule 6, any dirt which was enclosed between the fiber ferrule 6 and the protective coating 7 will stick to the protective coating 7. The protective coating 7 can be made of a cast material which is molded over the end face of the fiber ferrule 6. Alternatively, the protective coating 7 may consist of a kneadable material which allows for sealing the ferrule without molding the protective coating 7.

To protect the fiber ferrule 6 from impacts, particularly impacts coming from a longitudinal direction (L), the thickness t of the wall of the protective coating 7 in the longitudinal direction (L) of the fiber ferrule 6 corresponds to at least one diameter d of the fiber ferrule 6.

Fig. 2 shows a second embodiment for the present invention. Since most of the details illustrated therein are identical to the first embodiment the same reference numerals have been used and only the differences to the first embodiment will be described in more detail.

Fig. 2 shows the invention embodied in an LC-type connector. Contrary to the ST-type connector of Fig. 1 the LC-type connector of Fig. 2 is a small form factor connector. The optical fiber connector 1 may have a ceramic fiber ferrule 6 which can easily be terminated with any adhesive.

In addition to LC-type connectors and SC-type connectors, the invention can be embodied in any standard connector configuration including, for example, MU, FC and ST. The design features of these connectors are well known and will not be specifically addressed herein.

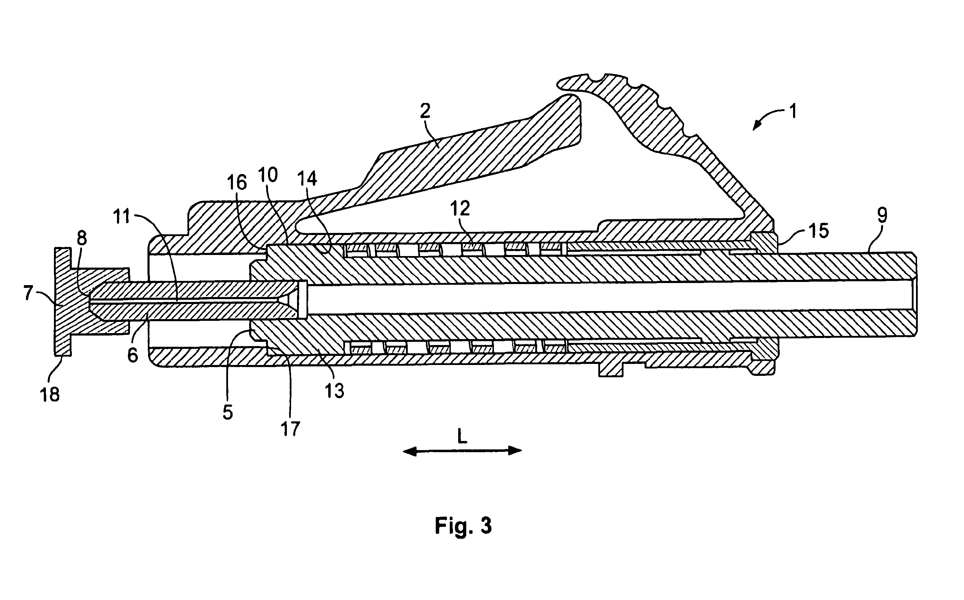

Fig. 3 shows an enlarged cross sectional view of the second embodiment of the invention. The ferrule assembly 5 comprises a rear portion 9 for attachment to a jacket of a jacketed fiber and a front portion 10 holding the fiber ferrule 6. The fiber ferrule 6 has a tube shaped recess 11, suitable for containing at least one fiber (not shown). The ferrule assembly 5 is urged forward by a spring 12 and guided by radially extending ridges 13, which are received in radially extending recesses 14. The spring 12 uses a rear insertion body 15 as a backstop. In its end position a shoulder 16 of the ferrule assembly 5 rests on a shoulder 17 of the housing 2.

The protective coating 7 is molded over the end, in particular the end face 8 of the fiber ferrule 6. To provide a grip for pulling off the protective coating 7 the protective coating 7 comprises a circular protrusion 18. The protrusion 18 serves to build up a form closure with a corresponding tool or the fingers of the manufacturer.

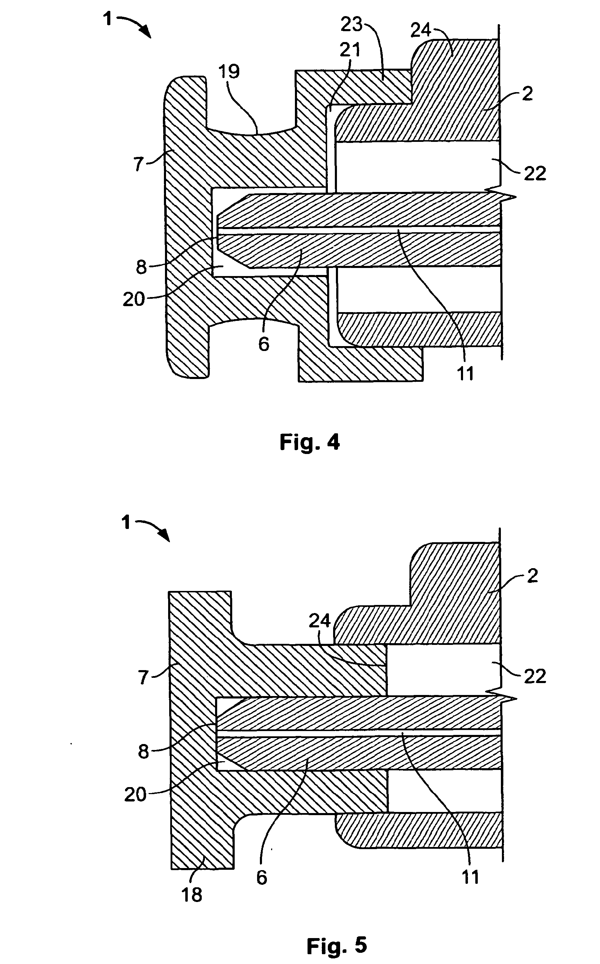

Fig. 4 shows a fourth embodiment of the invention, and the same reference numerals have been used. The protective coating 7 comprises a radially extending groove 19 which serves as grip 19 for removing the protective coating 7 from the fiber ferrule 6. The protective coating 7 has a first chamber 20 for receiving the end of the fiber ferrule 6 extending out of the housing 2 and a second chamber 21 for receiving the end of the housing 2 which surrounds the fiber ferrule 6. Due to a sealed connection between the housing 2 and the protective coating 7, the fiber ferrule 6 as well as the void of the housing 22 surrounding the fiber ferrule 6 are protected from dirt or dust. The end of the wall 23 abuts a protrusion 24 of the housing 2 and thereby serves as a stop for positioning the protective coating 7 without touching the fiber ferrule 6.

Fig. 5 shows a fifth embodiment of the present invention. Since most of the details illustrated therein are identical to the former embodiments described, only the differences thereto will be described in more detail.

The protective coating 7 has a first chamber 20 for receiving the fiber ferrule 6. An end portion 24 of the protective coating 7 is fitted to the void 22 and extends into the void 22, sealing the void 22 against dust or dirt from the outside of the housing 2 . The end face 8 of the fiber ferrule 6 serves as a stop for positioning the protective coating 7.

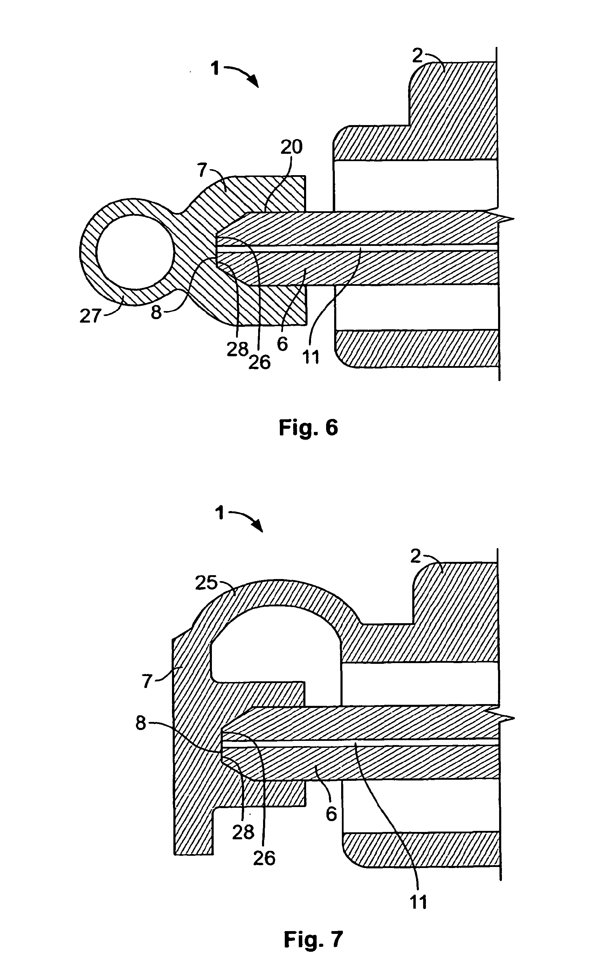

Fig. 6 shows a sixth embodiment for the present invention, and the same reference numerals have been used.

The protective coating 7 comprises a ring-like portion 25 which serves as a grip for mounting or dismounting the protective coating 7. A tool can be inserted into the opening of the ring portion 25 to pull the protective coating 7 off the fiber ferrule 6. The ring portion 27 can also serve for hanging up the connector 1 for storing or packaging.

At the inner surface of the recess 20 the protective coating 7 is provided with a glutinous surface 28, in particular where its face 26 abuts the end face 8 of the fiber ferrule 6, to absorb dirt or dust, in particular before mounting an optical fiber.

Fig. 7 shows a seventh embodiment for the present invention. Since most of the details illustrated therein are identical to the above described embodiments basically the differences thereto will be described in more detail.

The protective coating 7 is connected to the housing 2 by a strap 25. To reduce manufacturing costs the housing 2, the protective coating 7 and the strap 25 can be integrally formed from one body made of plastic material. The strap 25 builds a captive fastener for the protective coating 7.

## Claims

1. Optical fiber connector (1) for connecting a fiber optic cable, the optical fiber connector (1) comprising
a housing (2)
a fiber ferrule (6) for receiving an optical fiber, the fiber ferrule (6) having an end face (8), the end face (8) extending outwards from the housing (2),
and a protective coating (7), said protective coating (7) encasing the end face (8) of the fiber ferrule (6), **characterized in that** the protective coating (7) is provided with a glutinous surface (28), at least where its face (26) abuts the end face (8) of the fiber ferrule (6).

2. Optical fiber connector (1) according to claim 1, **characterized in that** the protective coating (7) is made from a cast material.

3. Optical fiber connector (1) according to claim 1 or 2, **characterized in that** the protective coating (7) is made from a plastics material.

4. Optical fiber connector (1) according to one of the claims 1 to 3, **characterized in that** the protective coating (7) is spaced apart from the housing (2).

5. Optical fiber connector (1) according to one of the claims 1 to 4, **characterized in that** the protective coating (7) is connected to the housing (2).

6. Optical fiber connector (1) according to one of the claims 1 to 5, **characterized in that** the protective coating (7) is integrally formed from the housing (2).

7. Optical fiber connector (1) according to one of the claims 1 to 6, **characterized in that** the thickness of the wall (t) of the protective coating (7) in the longitudinal direction (L) of the fiber ferrule (6) corresponds to at least one diameter (d) of the fiber ferrule (6).

8. Optical fiber connector (1) according to one of the claims 1 to 7, **characterized in that** the protective coating (7) comprises at least one protrusion (18), extending substantially transversally to the longitudinal direction (L) of the fiber ferrule (6).

9. Method of producing an optical fiber connector (1) for connecting a fiber optic cable, comprising a housing (2), and a fiber ferrule (6) having an end face (8), the end face (8) extending outwards from the housing (2), **characterized in that** a protective coating (7) is, at least where its face (26) abuts the end face (8) of the fiber ferrule (6), provided with a glutinous surface (28), and molded over the end-face (8).

## Patentansprüche

1. Steckverbinder (1) für optische Fasern für das Verbinden eines Lichtwellenleiterkabels, wobei der Steckverbinder (1) für optische Fasern aufweist:
ein Gehäuse (2);
ein Faserführungsröhrchen (6) für das Aufnehmen einer optischen Faser, wobei das Faserführungsröhrchen (6) eine Endfläche (8) aufweist, wobei sich die Endfläche (8) vom Gehäuse (2) nach außen erstreckt; und
einen Schutzüberzug (7), wobei der Schutzüberzug (7) die Endfläche (8) des Faserführungsröhrchens (6) umhüllt, **dadurch gekennzeichnet, dass** der Schutzüberzug (7) mit einer klebrigen Oberfläche (28) versehen ist, mindestens dort, wo seine Fläche (26) an die Endfläche (8) des Faserführungsröhrchens (6) anstößt.

2. Steckverbinder (1) für optische Fasern nach Anspruch 1, **dadurch gekennzeichnet, dass** der Schutzüberzug (7) aus einem Gussmaterial besteht.

3. Steckverbinder (1) für optische Fasern nach Anspruch 1 oder 2, **dadurch gekennzeichnet, dass** der Schutzüberzug (7) aus einem Kunststoffmaterial besteht.

4. Steckverbinder (1) für optische Fasern nach einem der Ansprüche 1 bis 3, **dadurch gekennzeichnet, dass** der Schutzüberzug (7) vom Gehäuse (2) beabstandet ist.

5. Steckverbinder (1) für optische Fasern nach einem der Ansprüche 1 bis 4, **dadurch gekennzeichnet, dass** der Schutzüberzug (7) mit dem Gehäuse (2) verbunden ist.

6. Steckverbinder (1) für optische Fasern nach einem der Ansprüche 1 bis 5, **dadurch gekennzeichnet, dass** der Schutzüberzug (7) zusammenhängend aus dem Gehäuse (2) geformt ist.

7. Steckverbinder (1) für optische Fasern nach einem der Ansprüche 1 bis 6, **dadurch gekennzeichnet, dass** die Dicke der Wand (t) des Schutzüberzuges (7) in der Längsrichtung (L) des Faserführungsröhrchens (6) mindestens einem Durchmesser (d) des Faserführungsröhrchens (6) entspricht.

8. Steckverbinder (1) für optische Fasern nach einem der Ansprüche 1 bis 7, **dadurch gekennzeichnet, dass** der Schutzüberzug (7) mindestens einen Vorsprung (18) aufweist, der sich im Wesentlichen quer zur Längsrichtung (L) des Faserführungsröhrchens (6) erstreckt.

9. Verfahren zur Herstellung eines Steckverbinders (1) für optische Fasern für das Verbinden eines Lichtwellenleiterkabels, der ein Gehäuse (2) und ein Faserführungsröhrchen (6) mit einer Endfläche (8) aufweist, wobei sich die Endfläche (8) vom Gehäuse (2) nach außen erstreckt, **dadurch gekennzeichnet, dass** ein Schutzüberzug (7) mindestens dort, wo seine Fläche (26) an die Endfläche (8) des Faserführungsröhrchens (6) anstößt, mit einer klebrigen Oberfläche (28) versehen und über der Endfläche (8) geformt ist.

## Revendications

1. Connecteur de fibres optiques (1) pour connecter un câble à fibres optiques, le connecteur de fibres optiques (1) comprenant :
un boîtier (2) ;
une ferrule de fibre (6) pour recevoir une fibre optique, la ferrule de fibre (6) comportant une face d'extrémité (8), la face d'extrémité (8) s'étendant vers l'extérieur du boîtier (2) ;
et un revêtement de protection (7), ledit revêtement de protection (7) renfermant la face d'extrémité (8) de la ferrule de fibre (6), **caractérisé en ce que** le revêtement de protection (7) comporte une surface glutineuse (28), au moins au niveau de l'emplacement où sa face (26) bute contre la face d'extrémité (8) de la ferrule de fibre (6).

2. Connecteur de fibres optiques (1) selon la revendication 1, **caractérisé en ce que** le revêtement de protection (7) est fabriqué à partir d'un matériau coulé.

3. Connecteur de fibres optiques (1) selon les revendications 1 ou 2, **caractérisé en ce que** le revêtement de protection (7) est fabriqué à partir d'un matériau plastique.

4. Connecteur de fibres optiques (1) selon l'une des revendications 1 à 3, **caractérisé en ce que** le revêtement de protection (7) est espacé du boîtier (2).

5. Connecteur de fibres optiques (1) selon l'une des revendications 1 à 4, **caractérisé en ce que** le revêtement de protection (7) est connecté au boîtier (2).

6. Connecteur de fibres optiques (1) selon l'une des revendications 1 à 5, **caractérisé en ce que** le revêtement de protection (7) est formé d'une seule pièce à partir du boîtier (2).

7. Connecteur de fibres optiques (1) selon l'une des revendications 1 à 6, **caractérisé en ce que** l'épaisseur de la paroi (t) du revêtement de protection (7), dans la direction longitudinale (L) de la ferrule de fibre (6), correspond à au moins un diamètre (d) de la ferrule de fibre (6).

8. Connecteur de fibres optiques (1) selon l'une des revendications 1 à 7, **caractérisé en ce que** le revêtement de protection (7) comprend au moins une saillie (18), s'étendant de manière essentiellement transversale par rapport à la direction longitudinale (L) de la ferrule de fibre (6).

9. Procédé de production d'un connecteur de fibres optiques (1) pour connecter un câble à fibres optiques, comprenant un boîtier (2) et une ferrule de fibre (6), comportant une face d'extrémité (8), la face d'extrémité (8) s'étendant vers l'extérieur du boîtier (2), **caractérisé en ce qu'**un revêtement de protection (7) comporte, au moins au niveau de l'emplacement où sa face (26) bute contre la face d'extrémité (8) de la ferrule de fibre (6), une surface glutineuse (28), et est moulé au-dessus de la face d'extrémité (8).
